# EUROPÄISCHE PATENTSCHRIFT

(11) **EP 0 427 050 B1**
(45) Veröffentlichungstag und Bekanntmachung des Hinweises auf die Patenterteilung: **08.06.1994**
(21) Anmeldenummer: 90120459.4
(22) Anmeldetag: 25.10.1990
(51) Int. Cl.: C09K 11/02, C09K 11/08, H01J 9/22

(54) **Verfahren zum Herstellen einer Leuchtstoffschicht**
Process of manufacturing a phosphor film
Procédé de fabrication d'une couche luminescente

(30) Priorität: 07.11.1989 DE 3937007
(43) Veröffentlichungstag der Anmeldung: 15.05.1991
(73) Patentinhaber: Licentia Patent-Verwaltungs-GmbH, 60596 Frankfurt (DE)
(72) Erfinder: Gerland, Klaus, W-7900 Ulm-Gögglingen (DE); Widmann, Hermann Dr, W-7900 Ulm (DE); Hoffmann, Klaus, W-6104 Seeheim-Jugenheim (DE)
(74) Vertreter: Amersbach, Werner, Dipl.-Ing.

(56) Entgegenhaltungen:
- WO-A-89/09250
- FR-A- 1 567 401

## Beschreibung

Die vorliegende Erfindung betrifft ein Verfahren nach dem Oberbegriff des Patentanspruches 1.

Zur Vermeidung von Streulichterscheinungen ist es zweckmäßig, eingefärbte Leuchtstoffteilchen zu verwenden, die im Auflicht dunkel erscheinen. Solche Leuchtstoffschichten werden z.B. in Meßeinrichtungen verwendet, wobei zur Anregung der Leuchtstoffschicht vorwiegend UV-Licht angewendet wird. Als Substrat dienen bevorzugt Metallschichten.

Der vorliegenden Erfindung liegt die Aufgabe zugrunde, ein einfach zu handhabendes Verfahren zum Herstellen von gleichmäßig eingefärbten Leuchtstoffschichten guter Haftung auf dem Substrat anzugeben.

Diese Aufgabe wird durch im Kennzeichen des Patentanspruches 1 angegebenen Merkmale gelöst.

Nach dem beschriebenen Verfahren hergestellte Leuchtstoffschichten weisen eine sehr gleichmäßige Dunkelfärbung auf, sind sehr streulichtarm und besitzen eine ausgezeichnete Haftfestigkeit auf unterschiedlichen Substratmaterialien, insbesondere auf metallenen oder metallähnlichen Substraten.

Anhand des nachfolgend beschriebenen Ausführungsbeispiels wird die Erfindung näher erläutert.
Es wird ein Leuchtstoff verwendet, der zumindest einen Anteil von Sulfidleuchtstoff oder Oxydsulfidleuchtstoff enthält. Dieser Leuchtstoff wird mit einem Glaslot vermischt oder ummantelt, das Bleioxyd enthält.

Das Leuchtstoff-Glaslotgemisch wird in gleichmäßiger Verteilung auf ein Substrat, z.B. ein Aluminiumblech aufgetragen und dann bei erhöhter Temperatur von ca. 300°C bis 600°C unter Erweichung des Glaslotes auf die Substratoberfläche aufgesintert oder aufgeschmolzen. Dabei entsteht offenbar als Ergebnis einer Reaktion des Schwefels des Leuchtstoffes mit dem Bleioxyd des Glaslotes schwarzes Bleisulfid in gleichmäßiger Verteilung. Es wird also gleichzeitig mit dem Aufsintern die Einfärbung der Leuchtstoffschicht vorgenommen. Werden Leuchtstoffe benötigt, deren Wirtsgitter kein Schwefel enthält, wie z.B. Silikat-, Oxyd- oder Phosphatleuchtstoffe, so ist es zweckmäßig, diesen Leuchtstoffen entsprechend deren Emissionscharakteristiken Sulfid- oder Oxydsulfidleuchtstoffe zumindest in kleinen Mengen beizugeben.

Das Verfahren eignet sich besonders zur Herstellung von sogenannten Detektierplättchen, die auf Gütern aubringbar sind und mittels UV-Licht ausgelesen werden können.

## Patentansprüche

1. Verfahren zum Herstellen einer Leuchtstoffschicht, bei dem die Leuchtstoffteilchen unter Verwendung eines Glaslotes auf die Oberfläche eines Substrates aufgesintert werden, dadurch gekennzeichnet, daß ein Bleioxyd enthaltendes Glaslot verwendet wird, daß ein Leuchtstoff verwendet wird, der zumindest teilweise Sulfid- oder Oxydsulfidleuchtstoffteilchen enthält und daß bei einer solchen Temperatur zwischen etwa 300°C und 600°C aufgesintert wird, daß sich eine Einfärbung der Leuchtstoffschicht ergibt.

## Claims

1. Process for the manufacture of a fluorescent material layer, in which the fluorescent material particles are sintered onto the surface of a substrate with use of a glass solder, characterised thereby that a glass solder containing lead oxide is used, that a fluorescent material is used which contains at least in part sulfide or oxide-sulfide fluorescent material particles, and that is sintered at such a temperature between about 300°C and 600°C that a dyeing of the fluorescent material layer results.

## Revendications

1. Procédé de préparation d'une couche luminescente au cours duquel on fritte les particules luminescentes en utilisant une masse à braser en verte sur la surface d'un substrat, caractérisé en ce qu'on utilise une masse à braser en verte qui contient un oxyde de plomb, qu'on utilise une matière luminescente qui contient, au moins partiellement, des particules luminescentes de sulfure ou d'oxysulfure, et qui est frittée à une température comprise entre environ 300°C et 600°C telle qu'on obtient une couleur unique de la couche luminescente.
